# EUROPEAN PATENT APPLICATION

(11) **EP 4 778 655 A1**
(43) Date of publication of application: **22.07.2026**
(21) Application number: 24865384.2
(22) Date of filing: 06.09.2024
(51) Int. Cl.: B23B 51/00

(54) **DRILL**

(30) Priority: 15.09.2023 JP 2023150250
(71) Applicant: Mitsubishi Materials Corporation, Tokyo 100-8117 (JP)
(72) Inventor: SATO Akira, Tokyo 100-8117 (JP); FUJITA Haruto, Tokyo 100-8117 (JP)
(74) Representative: Hoffmann Eitle
(86) International application number: PCT/JP2024/032083
(87) International publication number: WO 2025/057884

(57) **Abstract**

A drill (1) includes: a shaft-shaped tool main body (10) that is rotated about a central axis, the drill (1) having a chip discharge flute (14) formed on an outer periphery of the tool main body (10), and a cutting edge (15) formed at an intersection ridge portion between a tip flank face (13) and the chip discharge flute (14) of the tool main body (10). The tool main body (10) has a substrate and a hard coating (17) formed in a region of a predetermined length from a tip of the substrate. The chip discharge flute (14) has, in a central axis direction, a first section (S1) having a first surface roughness and a second section (S2) that is positioned closer to a posterior end side than the first section (S1) and that has a second surface roughness smaller than the first surface roughness, the first section (S1) and the second section (S2) being arranged in order from a tip of the tool main body (10). The first section (S1) has a length of at least 0.5 times a tool diameter (D). The hard coating (17) is formed in the first section (S1), and the hard coating (S17) is not formed in the second section (S2).

## Description

### TECHNICAL FIELD

The present invention relates to a drill.

Priority is claimed on Japanese Patent Application No. 2023-150250, filed September 15, 2023, the content of which is incorporated herein by reference.

### BACKGROUND ART

In the related art, a drill in which chip discharge performance is improved by smoothing a surface of a hard coating provided in a chip discharge flute is known (for example, see Patent Document 1).

### Citation List

### Patent Document

Patent Document 1: Japanese Patent No. 6828824

### SUMMARY OF INVENTION

### Technical Problem

By smoothing an inner surface of the chip discharge flute, chip clogging can be suppressed. However, when a surface of a hard coating on a rake face continuous to a cutting edge is polished, wear resistance of the hard coating deteriorates. In addition, since the surface of the hard coating inherently has a high surface roughness, even when the surface of the hard coating is smoothed, it has been difficult to obtain favorable chip discharge performance when the chip discharge flute is long.

An objective of the present invention is to provide a drill in which chip discharge performance is improved while ensuring wear resistance of a hard coating in the vicinity of a cutting edge.

### Solution to Problem

According to one aspect of the present invention, there is provided a drill including: a shaft-shaped tool main body that is rotated about a central axis, the drill having a chip discharge flute formed on an outer periphery of the tool main body, and a cutting edge formed at an intersection ridge portion between a tip flank face and the chip discharge flute of the tool main body. The tool main body has a substrate and a hard coating formed in a region of a predetermined length from a tip of the substrate. The chip discharge flute has, in a central axis direction, a first section having a first surface roughness and a second section that is located closer to a posterior end side than the first section and that has a second surface roughness smaller than the first surface roughness, the first section and the second section being arranged in order from a tip of the tool main body. The first section has a length of at least 0.5 times a tool diameter D. The hard coating is formed in the first section, and the hard coating is not formed in the second section.

With the above configuration, the hard coating is formed only at a tip portion of the drill, and a substrate surface having a small surface roughness is exposed in the chip discharge flute of the second section behind the tip portion. As a result, chips moving in the chip discharge flute of the second section can be smoothly moved to the posterior end side. As compared with a configuration in which the hard coating is formed over the entire chip discharge flute or a configuration in which a substrate surface subjected to ordinary grinding is exposed in the chip discharge flute on a rear side, the chip discharge performance can be improved.

In addition, in the first section of the tip portion, the hard coating is formed, resulting in a large surface roughness. Since the smoothed hard coating is partially removed or thinned, the hard coating is likely to be worn on a rake face and other areas subjected to a large load. In this configuration, since a surface of the hard coating of the first section has a large surface roughness, wear is less likely to occur around the cutting edge.

A configuration may be adopted in which a surface roughness of the substrate in the second section is smaller than a surface roughness of the substrate in the first section. The surface roughness of each section may be made different depending on the surface roughness of the substrate. Since the surface roughness in the second section can be further reduced, the chip discharge performance is improved.

A configuration may be adopted in which a surface of the hard coating having directional grinding marks is exposed in the first section, and a smooth surface of the substrate subjected to mirror grinding is exposed in the second section. The hard coating in the vicinity of the cutting edge has a surface shape having grinding marks, which allows a lubricant to easily permeate to the cutting edge, thereby suppressing damage to the cutting edge.

A configuration may be adopted in which a third section is provided between the first section and the second section, the third section has a third surface roughness that is smaller than the first surface roughness and larger than the second surface roughness, and the hard coating is formed in the third section.

A configuration may be adopted in which a third section is provided between the first section and the second section, the third section has a third surface roughness that is smaller than the first surface roughness and larger than the second surface roughness, and the hard coating is not formed in the third section.

A configuration may be adopted in which a surface roughness of the substrate in the second section and the third section is smaller than a surface roughness of the substrate in the first section.

A configuration may be adopted in which a surface of the hard coating having directional grinding marks is exposed in the first section, and a smooth surface of the substrate subjected to mirror grinding is exposed in the second section.

### Advantageous Effects of Invention

According to one aspect of the present invention, a drill is provided in which chip discharge performance is improved while ensuring wear resistance of a hard coating in the vicinity of a cutting edge.

### BRIEF DESCRIPTION OF DRAWINGS

[FIG. 1] A side view of a drill of an embodiment.
[FIG. 2] An enlarged partial side view showing a tip portion of the drill of the embodiment.
[FIG. 3] A front view of the drill of the embodiment.
[FIG. 4] A diagram showing a first example of the drill.
[FIG. 5] A diagram showing a second example of the drill.

### DESCRIPTION OF EMBODIMENTS

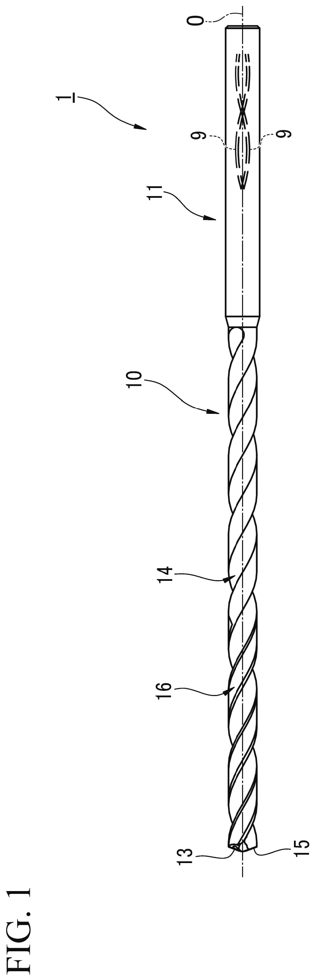

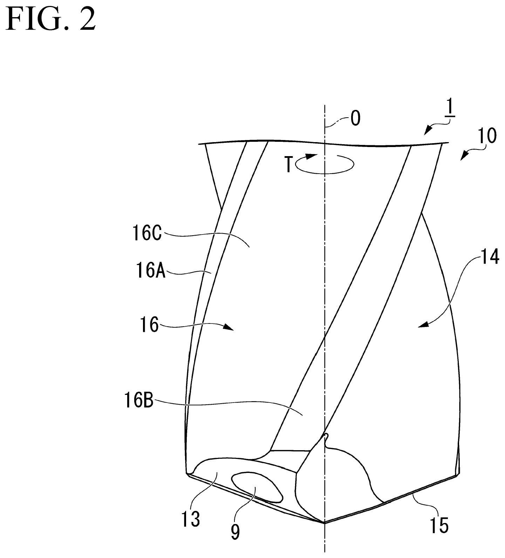

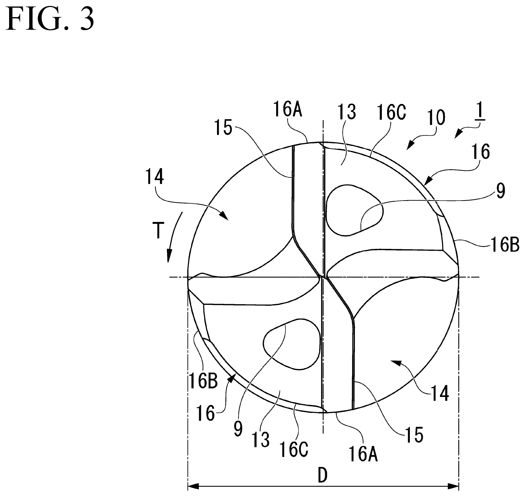

FIG. 1 is a side view of a drill of the present embodiment. FIG. 2 is an enlarged partial side view showing a tip portion of the drill of the present embodiment. FIG. 3 is a front view of the drill of the present embodiment.

A drill 1 of the present embodiment is a drill for deep hole machining.

The drill 1 has a substantially cylindrical shape about a central axis (axis line) O. The drill 1 includes a shaft-shaped body (tool main body) 10 and a shank 11 each extending along the central axis O. The drill 1 rotates about the central axis O with a tip surface of the body 10 facing a work material to perform machining on the work material.

The drill 1 of the present embodiment is a solid drill having a substrate made of a hard alloy or the like. The drill 1 has a hard coating made of a metal nitride or the like that coats a substrate surface.

A direction along the central axis O of the drill 1 (a direction in which the central axis O extends) is referred to as an axial direction. In the axial direction, a direction from the shank 11 to the body 10 is referred to as a tip side, and a direction from the body 10 to the shank 11 is referred to as a posterior end side.

A direction orthogonal to the central axis O is referred to as a radial direction. In the radial direction, a direction approaching the central axis O is referred to as a radially inner side, and a direction away from the central axis O is referred to as a radially outer side.

A direction around the central axis O is referred to as a circumferential direction. In addition, in the circumferential direction, a direction in which the body 10 rotates during drilling is referred to as a forward side in a rotation direction, and an opposite side thereof is referred to as a rearward side in a rotation direction.

The body 10 has a pair of cutting edges 15 and 15 located at a tip of the body 10, and a pair of chip discharge flutes 14 and 14 extending in a spiral shape along the outer periphery of the body 10 from the cutting edges 15 and 15 toward the posterior end side.

In the drill 1, two coolant holes 9 are formed to be twisted with the same lead as the chip discharge flute 14 in a symmetrical manner with respect to the central axis O from a posterior end surface of the shank 11 toward the tip side. The coolant holes 9 pass between the chip discharge flutes 14 in the body 10 and are each open to a tip flank face 13. During the drilling using the drill 1, a coolant, such as a cutting fluid or compressed air, is ejected from the two coolant holes 9. In addition, the tip flank face 13 is formed by two-stage flank faces. Out of the two-stage tip flank faces 13, a flank face located on a side opposite to a tool rotation direction T has a larger clearance angle. The coolant holes 9 are open to the flank face on the side opposite to the tool rotation direction T out of the two-stage flank faces.

The chip discharge flute 14 is twisted to the rearward side in the tool rotation direction T with a constant helix angle from the cutting edge 15 toward the posterior end side in the central axis O direction on the outer periphery of the body 10. The pair of chip discharge flutes 14 and 14 are arranged symmetrically with respect to the central axis O. The drill 1 of the present embodiment is used for deep hole machining, and a length of the chip discharge flute 14 along the central axis O direction is, for example, in a range of 8.0D to 30.0D with respect to an outer diameter of the cutting edge 15 of the drill 1. The outer diameter of the cutting edge 15 is an outer diameter of a circle formed by a rotation locus of the cutting edge 15 about the central axis O at an outer peripheral end of the cutting edge 15, that is, a tool diameter D.

The cutting edges 15 and 15 are formed at an intersection ridge portion between inner wall faces of the pair of chip discharge flutes 14 and 14 facing the forward side in the tool rotation direction T and the tip flank face 13 at the tip of the body 10. The pair of cutting edges 15 and 15 are arranged symmetrically with respect to the central axis O. The cutting edge 15 extends to the posterior end side as it extends toward an outer peripheral side (radially outer side) of the body 10, and has a point angle.

The body 10 has lands 16 and 16 between two chip discharge flutes 14 and 14. A first margin 16A is provided at an end portion of the land 16 on the forward side in the tool rotation direction T. A second margin 16B is provided at an end portion of the land 16 on the rearward side in the tool rotation direction T. The first margin 16A and the second margin 16B extend in a spiral shape along an end edge of the chip discharge flute 14. The body 10 has a body clearance 16C that is recessed radially inward between the first margin 16A and the second margin 16B.

In the drill 1 of the present embodiment, the hard coating is provided only at the tip portion of the body 10, and a portion of the chip discharge flute 14 except for the tip side portion is smoothed by mirror grinding. That is, the hard coating is formed in a region of a predetermined length from a tip of the substrate. With this configuration, the chip discharge flute 14 of the drill 1 is divided into a plurality of sections having different surface roughnesses along the axial direction. Hereinafter, the drill 1 of the present embodiment will be described in more detail with reference to two examples.

### (First Example)

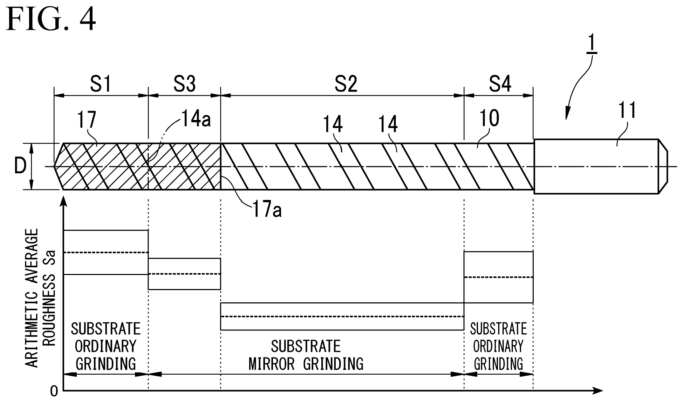

FIG. 4 is a diagram showing a first example of the drill 1 of the present embodiment.

As shown in FIG. 4, the hard coating 17 is formed only at the tip side portion of the substrate of the drill 1 and is not formed at the posterior end side portion of the substrate. In the first example, the hard coating 17 is formed in a region of about 1/3 from the tip of the body 10.

In addition, as shown in a lower part of FIG. 4, the substrate of the drill 1 has a wall surface of the chip discharge flute 14 partially subjected to mirror finishing. More specifically, the tip side portion of the chip discharge flute 14 is ground using an ordinary grindstone, and the substrate surface has a surface shape having directional grinding marks. On the other hand, the surface of the posterior end side portion of the chip discharge flute 14 is smoothed by mirror grinding using an elastic grindstone or the like after a flute is formed using an ordinary grindstone. The mirror-ground substrate surface is a smooth surface with reduced grinding marks.

The portion of the chip discharge flute 14 closest to the posterior end side is not mirror-ground. This is because the portion of the chip discharge flute 14 closest to the posterior end side has a flute depth that becomes shallower toward the posterior end and hardly contributes to chip discharge, whereas grinding in this region involves a high grinding load and affects productivity. It should be noted that the chip discharge flute 14 may be mirror-ground to its posterior end.

**In** the first example, a posterior end edge 17a of the hard coating 17 is located closer to the posterior end side than a tip edge 14a of the mirror-ground region of the substrate. That is, the posterior end side portion of the hard coating 17 and the tip side portion of the mirror-ground region of the substrate overlap each other. As a result, by combining two regions defined by a difference between ordinary grinding and mirror grinding of the substrate and two regions defined by the presence or absence of the hard coating 17, the wall surface of the chip discharge flute 14 of the drill 1 is divided into four sections: a first section S1; a second section S2; a third section S3; and a fourth section S4.

The first section S1 is located at the tip portion of the drill 1, and the wall surface of the chip discharge flute 14 has a configuration in which the hard coating 17 is formed on the surface of the substrate subjected to ordinary grinding.

The second section S2 is located in a region on the posterior-end side of a central portion of the drill 1, the hard coating 17 is not formed, and the surface of the substrate subjected to mirror grinding is exposed on the wall surface of the chip discharge flute 14.

The third section S3 is located between the first section S1 and the second section S2, and the wall surface of the chip discharge flute 14 has a configuration in which the hard coating 17 is formed on the surface of the substrate subjected to mirror grinding. The third section S3 is a region between the posterior end edge of the hard coating 17 and the tip edge 14a of the mirror-ground region of the substrate.

The fourth region S4 is located on the posterior end side of the second section S2, the hard coating 17 is not formed, and the surface of the substrate subjected to ordinary grinding is exposed on the wall surface of the chip discharge flute 14.

**In** the first section S1, since the uneven shape of the grinding marks on the substrate surface subjected to ordinary grinding overlaps isotropic unevenness of microparticles of the hard coating 17, a surface roughness (first surface roughness) of the first section S1 is the largest among the first section S1 to the fourth region S4.

**In** the second section S2, since the mirror-ground substrate surface is exposed, a surface roughness (second surface roughness) of the second section is the smallest among the first section S1 to the fourth region S4.

**In** the third section S3, since the hard coating 17 is formed on the mirror-ground substrate surface, a surface roughness (third surface roughness) of the third section S3 is smaller than the first surface roughness of the first section S1 and larger than the second surface roughness of the second section S2.

**In** the fourth region S4, since the substrate surface subjected to ordinary grinding is exposed, a surface roughness of the fourth region S4 is smaller than the first surface roughness of the first section S1 and larger than the second surface roughness of the second section S2.

It is preferable that an arithmetic average roughness Sa of the substrate surface of the second section S2 be equal to or less than 0.8 times or equal to or less than 0.5 times an arithmetic average roughness Sa of the hard coating 17 surface of the first section S1. It is preferable that an arithmetic average roughness Ra of the substrate surface of the second section S2 be equal to or less than 0.8 times or equal to or less than 0.5 times an arithmetic average roughness Ra of the hard coating 17 surface of the first section S1.

In the first section S1, it is preferable that the arithmetic average roughness Sa or Ra of the hard coating 17 surface be 1.6 µm or less or 0.4 µm or less. In a case where the surface roughness of the first section S1 is too large, chips may be difficult to be discharged in the vicinity of the cutting edge 15, which may increase the cutting resistance.

It is preferable that the mirror-ground substrate surface in the second section S2 have a small value of a developed area ratio Sdr of an interface as defined in ISO25178. The smaller the value of the developed area ratio Sdr of the interface is, the flatter the measurement target region is. The developed area ratio Sdr of the interface on the mirror-ground substrate surface in the second section S2 is preferably 0.2 or less and more preferably close to 0.

The surface roughness of the hard coating 17 in the first section S1 is a value measured on a rake face continuous to the cutting edge 15. The surface roughnesses in the second section S2, the third section S3, and the fourth region S4 are values measured at the deepest position of the chip discharge flute 14 near a central portion of each section in the axial direction. Since a boundary between the sections is easily affected by the surface roughness of the adjacent region, it is preferable to measure the surface roughness at the central portion of each section.

The arithmetic average roughnesses Sa and Ra and the developed area ratio Sdr of the interface are obtained, for example, by observing and measuring three regions of 50 µm × 50 µm using a white light interferometer-equipped laser microscope (VK-X3000) manufactured by KEYENCE CORPORATION at a cutoff value of 0.25 mm and a magnification of 100 times, and calculating an average of the obtained measurement values.

In the drill 1 of the present embodiment, the first section S1 has a length of at least 0.5×D in the axial direction. This is because, in a case where a portion having a low surface roughness is too close to the cutting edge 15, the hard coating 17 is likely to be worn at the portion having a low surface roughness.

Although not particularly limited, the length of the first section S1 in the axial direction may be 0.7×D or more, or 1.0xD or more.

In addition, although not particularly limited, the length of the first section S1 in the axial direction may be 10×D or less, 7×D or less, or 5×D or less.

The length in the axial direction of the region where the hard coating 17 is formed is preferably 10×D or less. The region where the hard coating 17 is formed has a large surface roughness. Therefore, the longer the hard coating 17 extends toward the posterior end side, the more likely chips are to receive resistance in the chip discharge flute 14, and the cutting resistance tends to increase.

With the drill 1 of the first example having the above configuration, the hard coating 17 is formed only at the tip portion of the drill 1, and the mirror-ground substrate surface is exposed in the chip discharge flute 14 of the second section S2 behind the tip portion. As a result, chips moving in the chip discharge flute 14 of the second section S2 can be smoothly moved to the posterior end side. As compared with a configuration in which the hard coating is formed over the entire chip discharge flute or a configuration in which a substrate surface subjected to ordinary grinding is exposed in the chip discharge flute on a rear side, the chip discharge performance can be improved.

In addition, in the drill 1 of the first example, in the first section S1 of the tip portion, the hard coating 17 is formed on the substrate surface subjected to ordinary grinding. In a case where the surface of the hard coating is smoothed, the hard coating is partially removed or thinned, so that the hard coating is likely to be worn on a rake face and other areas subjected to a large load. On the other hand, in the drill 1 of the first example, since the hard coating 17 that is not smoothed is provided around the cutting edge 15 where chips are generated, wear is less likely to occur.

Further, since the surface of the substrate subjected to ordinary grinding is a surface having directional grinding marks, the surface of the hard coating of the first section S1 also has a surface shape having directional grinding marks. This allows a lubricant to easily permeate to the cutting edge 15, thereby suppressing damage to the cutting edge 15.

In addition, in the present embodiment, since only a portion of the chip discharge flute 14 needs to be mirror-ground, the process time can be shortened as compared with a case where the entire chip discharge flute 14 is mirror-ground, thereby ensuring productivity in tool manufacturing.

In addition, since the drill 1 of the first example has the third section S3 in which the hard coating 17 is formed on the mirror-ground substrate surface, the region where the hard coating 17 is formed is relatively long. As the tool diameter is smaller, it is preferable to shorten the area where the hard coating 17 is formed. However, in a case where the area where the hard coating 17 is formed is too short, the thickness of the hard coating cannot be ensured. In this case, as in the present example, by coating a portion of the mirror-ground substrate surface with the hard coating 17, the hard coating 17 can be formed to have a predetermined film thickness even on a small-diameter drill, thereby ensuring the life performance of the drill.

In the first example, a configuration may be adopted in which an axial position of the posterior end edge 17a of the hard coating 17 and an axial position of the tip edge 14a of the mirror-ground region of the substrate match each other. In this case, the drill 1 of the first example has a configuration in which the first section S1 and the second section S2 are adjacent to each other and the third section S3 is not provided. Even in this case, the effects of providing the first section S1 and the second section S2 can be obtained.

### (Second Example)

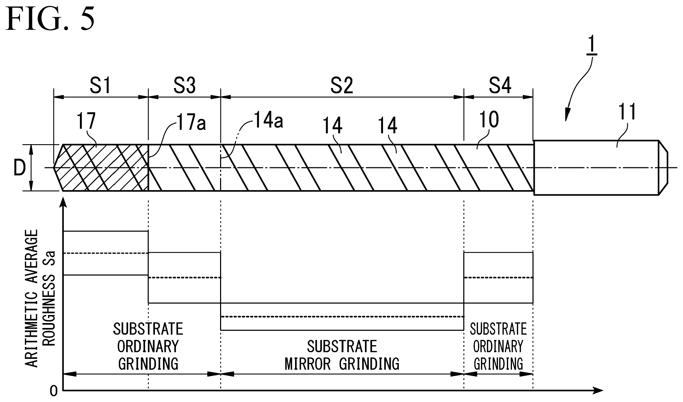

FIG. 5 is a diagram showing a second example of the drill 1 of the present embodiment. The description of the portions common to the first example shown in FIG. 4 will be omitted as appropriate.

As shown in FIG. 5, the hard coating 17 is formed only at the tip side portion of the substrate of the drill 1 and is not formed at the posterior end side portion of the substrate. In the first example, the hard coating 17 is formed in a region of about 1/5 from the tip of the body 10.

In addition, as shown in a lower part of FIG. 5, the tip side portion of the chip discharge flute 14 is ground using an ordinary grindstone, and the substrate surface has a surface shape having directional grinding marks. On the other hand, the surface of the central portion of the chip discharge flute 14 is smoothed by mirror grinding using an elastic grindstone or the like. The portion of the chip discharge flute 14 closest to the posterior end side is not mirror-ground.

In the second example, a posterior end edge 17a of the hard coating 17 is located closer to the tip side than the tip edge 14a of the mirror-ground region of the substrate. That is, the region where the hard coating 17 is formed and the mirror-ground region of the substrate do not overlap each other. As a result, in the drill 1 of the second example as well, the wall surface of the chip discharge flute 14 of the drill 1 is divided into four sections: a first section S1; a second section S2; a third section S3; and a fourth section S4.

The first section S1 is located at the tip portion of the drill 1, and the wall surface of the chip discharge flute 14 has a configuration in which the hard coating 17 is formed on the surface of the substrate subjected to ordinary grinding.

The second section S2 is located in a region on the posterior-end side of a central portion of the drill 1, the hard coating 17 is not formed, and the surface of the substrate subjected to mirror grinding is exposed on the wall surface of the chip discharge flute 14.

The third section S3 is located between the first section S1 and the second section S2, and the surface of the substrate subjected to ordinary grinding is exposed on the wall surface of the chip discharge flute 14.

The fourth region S4 is located on the posterior end side of the second section S2, the hard coating 17 is not formed, and the surface of the substrate subjected to ordinary grinding is exposed on the wall surface of the chip discharge flute 14.

**In** the first section S1, since the uneven shape of the grinding marks on the substrate surface subjected to ordinary grinding overlaps isotropic unevenness of microparticles of the hard coating 17, a surface roughness (first surface roughness) of the first section S1 is the largest among the first section S1 to the fourth region S4.

In the second section S2, since the mirror-ground substrate surface is exposed, a surface roughness (second surface roughness) of the second section is the smallest among the first section S1 to the fourth region S4.

In the third section S3, since the substrate surface subjected to ordinary grinding is exposed, a surface roughness (third surface roughness) of the third section S3 is smaller than the first surface roughness of the first section S1 and larger than the second surface roughness of the second section S2.

In the fourth region S4, since the substrate surface subjected to ordinary grinding is exposed, a surface roughness of the fourth region S4 is smaller than the first surface roughness of the first section S1 and larger than the second surface roughness of the second section S2.

In the drill 1 of the second example having the above configuration as well, the hard coating 17 is formed only at the tip portion of the drill 1, and the mirror-ground substrate surface is exposed in the chip discharge flute 14 of the second section S2 behind the tip portion. As a result, the drill 1 has excellent chip discharge performance, as in the first example.

**In** addition, in the drill 1 of the second example as well, in the first section S1 of the tip portion, the hard coating 17 is formed on the substrate surface subjected to ordinary grinding. As a result, the hard coating 17 is less likely to be worn around the cutting edge 15 where chips are generated.

**In** the drill 1 of the second example, the substrate surface subjected to ordinary grinding extends to the posterior end side beyond the region where the hard coating 17 is formed. When the tool diameter of the drill is large, even in a case where the area of the hard coating 17 is relatively short, the film thickness of the hard coating 17 is easily ensured, so that the configuration of the second example is easily applicable.

The drill 1 of the second example may be designed in consideration of regrinding. Repeated regrinding causes the mirror-ground region of the substrate to gradually approach the tip. Therefore, in a case where the ordinarily ground face of the substrate is short, repeated regrinding may result in a mirror-ground face at the tip portion of the drill 1, which may accelerate wear of the hard coating on the rake face and other areas. On the other hand, in the drill 1 of the second example, since the ordinarily ground region of the substrate can be lengthened, the mirror-ground surface is less likely to be located in the vicinity of the cutting edge 15 even after repeated regrinding.

However, the third section S3 where the substrate surface subjected to ordinary grinding is exposed has a relatively large surface roughness, which tends to hinder the discharge of chips. Therefore, it is preferable that the axial length of the third section S3 in the second example be 2×D or less.

### INDUSTRIAL APPLICABILITY

According to the present invention, it is possible to provide a drill in which chip discharge performance is improved while ensuring wear resistance of a hard coating in the vicinity of a cutting edge.

### REFERENCE SIGNS LIST

1 Drill
10 Body (tool main body)
11 Shank
13 Tip flank face
14 Chip discharge flute
14a Tip edge of mirror-ground region
15 Cutting edge
16 Land
16A First margin
16B Second margin
16C Body clearance
17 Hard coating
17a Posterior end edge of hard coating
D Tool diameter
O Central axis (axis line)
Ra, Sa Arithmetic average roughness
S1 First section
S2 Second section
S3 Third section
S4 Fourth section
Sdr Developed area ratio of interface
T Tool rotation direction

## Claims

1. A drill comprising a shaft-shaped tool main body that is rotated about a central axis, the drill having a chip discharge flute formed on an outer periphery of the tool main body, and a cutting edge formed at an intersection ridge portion between a tip flank face and the chip discharge flute of the tool main body,
wherein the tool main body has a substrate and a hard coating formed in a region of a predetermined length from a tip of the substrate,
the chip discharge flute has, in a central axis direction, a first section having a first surface roughness and a second section that is positioned closer to a posterior end side than the first section and that has a second surface roughness smaller than the first surface roughness, the first section and the second section being arranged in order from a tip of the tool main body,
the first section has a length of at least 0.5 times a tool diameter D, and
the hard coating is formed in the first section, and the hard coating is not formed in the second section.

2. The drill according to Claim 1,
wherein a surface roughness of the substrate in the second section is smaller than a surface roughness of the substrate in the first section.

3. The drill according to Claim 1,
wherein a surface of the hard coating having directional grinding marks is exposed in the first section, and
a smooth surface of the substrate subjected to mirror grinding is exposed in the second section.

4. The drill according to Claim 1,
wherein a third section is provided between the first section and the second section,
the third section has a third surface roughness that is smaller than the first surface roughness and larger than the second surface roughness, and
the hard coating is formed in the third section.

5. The drill according to Claim 1,
wherein a third section is provided between the first section and the second section,
the third section has a third surface roughness that is smaller than the first surface roughness and larger than the second surface roughness, and
the hard coating is not formed in the third section.

6. The drill according to Claim 4 or 5,
wherein a surface roughness of the substrate in the second section and the third section is smaller than a surface roughness of the substrate in the first section.

7. The drill according to Claim 4 or 5,
wherein a surface of the hard coating having directional grinding marks is exposed in the first section, and
a smooth surface of the substrate subjected to mirror grinding is exposed in the second section.
